# FASCICULE DE BREVET EUROPEEN

(11) **EP 2 767 818 B1**
(45) Date de publication et mention de la délivrance du brevet: **09.09.2015**
(21) Numéro de dépôt: 14154627.5
(22) Date de dépôt: 11.02.2014
(51) Int. Cl.: G01M 13/04

(54) **Système de diagnostic de l'état structurel d'une unité de roulement d'un engin à roues sur une voie, comprenant des antennes ponctuelles émettrice et réceptrice.**
Diagnosesystem des strukturellen Zustands einer Rolleinheit eines Rollwagens auf einer Schiene, das punktuelle Sende- und Empfangsantennen umfasst
System for diagnosing the structural condition of a bearing unit of a wheeled vehicle on a track, comprising isolated transmitting and receiving antennas

(30) Priorité: 13.02.2013 FR 1351247
(43) Date de publication de la demande: 20.08.2014
(73) Titulaire: NTN-SNR Roulements, 74000 Annecy (FR)
(72) Inventeur: Guerre-Chaley, Frédéric, 74230 DINGY SAINT CLAIR (FR); Lenon, Hervé, 74540 GRUFFY (FR)
(74) Mandataire: Derambure Conseil

(56) Documents cités:
- WO-A1-2011/129750
- US-A1- 2003 030 565
- US-A1- 2011 063 170

## Description

L'invention est relative au diagnostic de l'état structurel d'une unité de roulement d'un engin à roues sur une voie.

Elle a plus spécialement pour objet, en premier lieu, un système de diagnostic de l'état structurel présent ou prévisionnel d'une unité de roulement implantée sur un engin à roues apte et destiné à se trouver et à se déplacer en roulant sur une voie dans sa direction longitudinale, en particulier un véhicule ferroviaire, en deuxième lieu, un engin à roues faisant partie d'un tel système de diagnostic et, plus généralement, en troisième lieu, un système d'antennes - antenne émettrice et antenne réceptrice - adapté de sorte à faire partie du système de diagnostic.

Dans une réalisation particulière où l'invention est tout spécialement utile, adaptée et avantageuse, l'engin à roues est un véhicule ferroviaire. Par « véhicule ferroviaire », l'on entend une voiture ou un wagon ou une locomotive ou motrice pour le transport ferroviaire ou tout ensemble de ceux-ci, attelés et formant un convoi ferroviaire, tel qu'un train, ce qui inclut, notamment, un train de marchandises, un train de personnes, un train mixte, un train à grande vitesse, etc.

Le document FR 2 944 875 décrit un procédé de détection d'un défaut structurel d'un ensemble mécanique comprenant un organe tournant, prévoyant une analyse préalable d'identification d'une fréquence caractéristique de l'apparition du défaut sur un tour de rotation de l'organe, et les étapes itératives de :
▪ mesure de la vitesse instantanée de rotation de l'organe tournant ;
▪ échantillonnage angulaire de ladite mesure pour obtenir un signal échantillonné qui est représentatif de la vitesse instantanée de rotation de l'organe ;
▪ analyse harmonique spatiale du signal échantillonné pour obtenir un spectre de la vitesse instantanée de rotation de l'organe ;
▪ surveillance de l'amplitude du spectre pour la fréquence caractéristique de sorte, en fonction de ladite amplitude, à en déduire l'apparition du défaut correspondant.

Selon ce document, la mesure de la vitesse est réalisée au moyen d'un codeur solidaire en rotation de l'organe tournant, ledit codeur comprenant une piste multipolaire et d'un capteur fixe.

Ce procédé peut être appliqué au diagnostic embarqué de l'état d'usure d'un ensemble mécanique comprenant un organe tournant pour un engin à roues, en particulier un véhicule ferroviaire.

Le déposant a déjà élaboré un système de diagnostic de l'état structurel présent ou prévisionnel d'une unité de roulement implantée sur un engin à roues, en particulier un véhicule ferroviaire, pour son déplacement, qui comprend :
▪ un moyen de mesure de la valeur d'un paramètre des conditions de roulage de l'unité de roulement caractéristique de son état structurel, embarqué sur l'engin et associé à l'unité de roulement, apte à mesurer la valeur du paramètre et à fournir une donnée caractéristique des conditions de roulage, et un moyen de calcul et d'analyse, apte, à partir de la donnée caractéristique, à fournir une information de diagnostic de l'état structurel présent ou prévisionnel de l'unité de roulement,
▪ des moyens de communication de données entre l'engin et une ou plusieurs unités de recueil de données, dissociées structurellement de l'engin et situées en un ou plusieurs endroits de communication de la voie.

Avec une telle réalisation, il importe que la transmission de la donnée caractéristique ou de l'information de diagnostic entre le véhicule et l'unité de recueil de données en situation de recueillir cette donnée caractéristique ou cette information de diagnostic soit assurée de façon effective et sûre, même si l'engin se déplace sur la voie.

Les documents FR 2 713 574, FR 2 819 772 et FR 2 960 349 décrivent des agencements de communication entre des balises au sol situées en plusieurs endroits de communication de la voie, entre les deux rails, et une antenne embarquée sur un véhicule ferroviaire apte et destiné à se trouver et à se déplacer en roulant sur la voie dans sa direction longitudinale. Ces agencements sont destinés à localiser le véhicule ferroviaire le long de la voie. Ils ne sont pas adaptés au cas où, comme dans le contexte de l'invention, il s'agit d'émettre depuis un engin - qui n'est pas nécessairement un véhicule ferroviaire se déplaçant sur voie constitué par deux rails espacés - une donnée variable pouvant être complexe, et de recevoir au sol cette donnée, alors même que l'engin peut se déplacer à grande vitesse, que l'antenne embarquée peut n'être pas située sous l'engin, que la distance entre une antenne émettrice et une antenne réceptrice lors de la communication entre elles peut être conséquente et peut n'être pas constante, que la position relative entre une antenne émettrice et une antenne réceptrice lors de la communication entre elles peut n'être pas constante, que l'engin peut comporter un nombre d'antennes émettrices conséquent avec des espacements qui peuvent être variables, que l'engin peut se trouver ou se déplacer dans un environnement difficile.

Le document EP 1 998 403 décrit une antenne de réception et/ou d'émission montée sur un véhicule ferroviaire se déplaçant le long d'au moins une voie et communiquant avec un dispositif de communication fixe disposé le long d'au moins une voie au moyen de signaux hyperfréquences de longueur d'onde donnée, constituée d'un guide d'ondes de section rectangulaire dont une grande face est percée de fentes rectangulaires dont la grande dimension est inférieure à la demi-longueur d'ondes du signal hyperfréquence, l'espacement entre le centre de deux fentes successives étant voisin d'une demi-longueur d'onde du signal hyperfréquence propagé dans le guide d'ondes, alors que le dispositif de communication fixe est lui-aussi constitué d'un guide d'ondes analogue. De telles antennes à guide d'ondes ne sont pas davantage adaptées au cas du contexte de l'invention envisagé précédemment notamment dans lequel l'engin comporte une pluralité d'antennes espacées les unes des autres dans sa direction principale longitudinale.

Dans le domaine des télécommunications spatiales, le document EP 1 641 071 enseigne un système antennaire intégré du type comportant: au moins une antenne sensiblement plate et circulaire équipée d'un axe de rotation coïncidant avec son axe, l'antenne étant solidaire d'un support comprenant lui-même un axe de rotation, tel que le système antennaire comprend au moins deux antennes plates sensiblement circulaires, chacune d'elles étant inclinée par rapport au support d'antenne, les antennes présentant des faisceaux inclinés par rapport à l'axe de rotation de l'antenne, un dispositif adapté étant prévu pour faire tourner les antennes et leur support. Un tel système antennaire n'est pas davantage adapté au cas du contexte de l'invention.

Dans les domaines du packaging, de la logistique, de la vente, du contrôle d'objets, il est connu de lire par un procédé optique des codes tels que des codes-barres ou des codes matriciels, ou bien des marqueurs tels que des radio-étiquettes comme des puces RFID comprenant une antenne qui peut être mise en relation fonctionnelle avec un émetteur-récepteur, la lecture étant alors assurée par un procédé à radiofréquences. Ces techniques ne sont toutefois pas adaptées au cas du contexte de l'invention.

Le document US 2003/030565 divulgue un système de diagnostic de l'état structurel d'une unité de roulment.

Il existe donc le besoin de disposer d'un système à antennes - antenne émettrice et antenne réceptrice - adapté à un système de diagnostic de l'état structurel d'une unité de roulement implantée sur un engin à roues apte et destiné à se trouver et à se déplacer en roulant sur une voie dans sa direction longitudinale, en particulier un véhicule ferroviaire, qui comprend un moyen de mesure de la valeur d'un paramètre des conditions de roulage de l'unité de roulement caractéristique de son état structurel, embarqué sur l'engin et associé à l'unité de roulement, apte à mesurer la valeur du paramètre et à fournir une donnée caractéristique des conditions de roulage, et un moyen de calcul et d'analyse, apte, à partir de la donnée caractéristique, à fournir une information de diagnostic de l'état structurel présent ou prévisionnel de l'unité de roulement, tel que le système de diagnostic comprenne une antenne émettrice embarquée sur l'engin et une antenne réceptrice dissociée structurellement de l'engin et se trouvant au voisinage de la voie, de sorte que le recueil de la donnée caractéristique ou de l'information de diagnostic soit assuré de façon effective et sûre.

Cette exigence d'un recueil effectif et sûr doit être assurée, y compris alors que :
- l'engin, en particulier le véhicule ferroviaire, se déplace sur la voie, et en particulier à grande vitesse. Par exemple, la vitesse peut être comprise dans la fourchette 300 km/h - 600 km/h, cette fourchette étant donnée à titre illustratif et nullement limitatif. Et, qui peut le plus pouvant le moins, la vitesse peut être inférieure et le cas échéant nettement inférieure, par exemple de l'ordre de 50 km/h.
- l'antenne embarquée n'est pas située sous l'engin, en particulier le véhicule ferroviaire, en partie médiane mais, par exemple, latéralement, vers l'extérieur et le bas du véhicule.
- la distance entre une antenne émettrice et une antenne réceptrice lors de la communication entre elles est conséquente. Par exemple, cette distance peut être de l'ordre de quelques dizaines de centimètres à quelques mètres ou dizaines de mètres.
- cette distance n'est pas exactement constante, toutes choses égales par ailleurs.
- la position relative entre une antenne émettrice et une antenne réceptrice lors de la communication entre elles n'est pas exactement constante, toutes choses égales par ailleurs.
- l'engin, en particulier le véhicule ferroviaire, comporte une pluralité d'antennes espacées les unes des autres sur l'engin dans sa direction principale longitudinale, en particulier pour diagnostiquer l'état structurel d'une pluralité d'unités de roulement implantées sur l'engin associées notamment à ses essieux ou à sa chaîne de transmission. Par exemple, pour un véhicule ferroviaire, le nombre des unités de roulement à diagnostiquer et le nombre d'antennes émettrices peut atteindre une cinquantaine ou une centaine, avec une répartition sur une longueur qui peut être comprise dans la fourchette 300 m - 500 m, avec des espacements qui peuvent être de l'ordre d'un ou de deux mètres ou bien de l'ordre de quinze à vingt mètres.
- le système à antennes doit être robuste de sorte à pouvoir fonctionner dans des conditions variables et difficiles, par exemple en ce qui concerne la température, la présence de corps incongrus...

Il existe également le besoin de disposer d'un tel système à antennes adapté pour pouvoir être installé à la fois en première monte et en seconde monte sur un engin à roues, en particulier un véhicule ferroviaire, et une voie déjà existants.

Il existe également le besoin de disposer d'un tel système à antennes adapté pour fonctionner avec des engins, en particulier véhicules ferroviaires, différents les uns des autres.

Ces besoins se présentent non seulement avec des véhicules ferroviaires, mais également pour d'autres engins à roues et d'autres applications.

Tel est le problème à la base de l'invention qui apporte une solution à ce problème.

Ci-après, un exposé des caractéristiques de l'invention.

Selon un premier aspect, l'invention a pour objet un système de diagnostic de l'état structurel présent ou prévisionnel d'une unité de roulement implantée sur un engin à roues apte et destiné à se trouver et à se déplacer en roulant sur une voie dans sa direction longitudinale, en particulier un véhicule ferroviaire,
▪ qui comprend :
   o un moyen de mesure de la valeur d'un paramètre des conditions de roulage de l'unité de roulement caractéristique de son état structurel, embarqué sur l'engin et associé à l'unité de roulement, apte à mesurer la valeur du paramètre et à fournir une donnée caractéristique des conditions de roulage, et un moyen de calcul et d'analyse, apte, à partir de la donnée caractéristique, à fournir une information de diagnostic de l'état structurel présent ou prévisionnel de l'unité de roulement,
   o une antenne ponctuelle directionnelle émettrice, embarquée sur l'engin, apte à émettre la donnée caractéristique ou l'information de diagnostic dans une direction principale d'émission et un lobe principal d'émission,
   o une antenne ponctuelle réceptrice, dissociée structurellement de l'engin et localisée dans ou à proximité d'un endroit de communication de la voie, apte à recevoir la donnée caractéristique ou l'information de diagnostic, et qui, par rapport à la voie et à l'engin, est agencée de sorte à se trouver dans le lobe principal d'émission de l'antenne d'émission au moment où l'engin, en particulier au moment où l'antenne émettrice, passe ou se trouve dans l'endroit de communication de la voie,
▪ l'antenne émettrice étant positionnée par rapport à l'engin et à la voie avec la direction principale d'émission en oblique par rapport à la direction longitudinale à l'endroit de communication, le lobe principal d'émission croisant l'antenne réceptrice en biais.

Ainsi, lorsque l'engin se déplace sur la voie et toutes choses égales par ailleurs, la durée pendant laquelle l'antenne réceptrice se trouve dans le lobe principal d'émission est augmentée.

Selon une réalisation, la direction principale d'émission est inclinée par rapport à la direction longitudinale à l'endroit de communication avec un angle compris entre 20° et 70°, plus particulièrement compris entre 35° et 65 °.

Selon une réalisation, l'antenne émettrice est portée par l'engin de façon relative fixe. Selon une autre réalisation, l'antenne émettrice est portée par l'engin de façon relative mobile et blocable en position, le système de diagnostic comportant un moyen de liaison antenne émettrice-engin qui soit mobile ou déformable et un moyen de blocage en position relative fixe antenne émettrice-engin apte à être rendu actif lorsque souhaité. En particulier, l'antenne émettrice est portée par l'engin de façon relative mobile à pivotement, en particulier autour d'un axe vertical ou sensiblement vertical.

Selon les réalisations, il est prévu un moyen de commande du fonctionnement de l'antenne émettrice de façon permanente ou de façon temporaire pendant des phases d'émission commandées soit à des intervalles de temps réguliers soit à la demande soit en réponse à un facteur contextuel.

Selon les réalisations, le système de diagnostic comprend une antenne émettrice unique ou au moins deux antennes émettrices, en particulier des antennes émettrices analogues, formant un ensemble fonctionnel émetteur.

Selon les cas, les deux antennes émettrices ont des directions principales d'émission qui sont sensiblement parallèles entre elles, ou sont sensiblement perpendiculaires ou en oblique l'une par rapport à l'autre, et en particulier dont les directions principales d'émission sont sensiblement symétriques l'une de l'autre par rapport à une direction transversale perpendiculaire à la direction longitudinale à l'endroit de communication.

Selon une réalisation, les deux antennes émettrices sont positionnées sur l'engin avec les directions principales d'émission en oblique par rapport à la direction longitudinale à l'endroit de communication, selon deux angles d'inclinaison sensiblement identiques par rapport à la direction longitudinale à l'endroit de communication et l'un ou l'autre ou l'un et l'autre des sens.

Selon les réalisations, les deux antennes émettrices sont agencées avec les lobes d'émission principaux se recouvrent partiellement, ou se tangentant, en particulier vers leurs parties distales, ou bien avec les lobes d'émission principaux ne se recouvrent pas.

Selon les réalisations, le système de diagnostic comporte un moyen de commande du fonctionnement des deux antennes émettrices de sorte que les deux antennes émettrices fonctionnent de façon simultanée ou de sorte que l'une des deux antennes émettrices fonctionne alors que l'autre des deux antennes émettrices ne fonctionne pas. Dans une réalisation, le moyen de commande du fonctionnement des deux antennes émettrices est responsif au sens de déplacement de l'engin sur la voie.

Selon les réalisations, les deux antennes émettrices sont les deux parties distinctes d'une même structure ou sont deux structures distinctes l'une de l'autre.

Selon une réalisation, les deux moyens de liaison antenne émettrice-engin des deux antennes émettrices sont mobiles ou déformables et agencés ou commandés pour un déplacement analogue simultané des deux antennes émettrices.

Selon les réalisations, les deux moyens de commande du fonctionnement des deux antennes émettrices sont agencés ou commandés pour un fonctionnement synchrone ou asynchrone des deux antennes émettrices.

Selon une réalisation avec un engin, ayant une direction principale longitudinale et une pluralité d'unités de roulement, le système de diagnostic comporte une pluralité d'antennes émettrices ou d'ensembles fonctionnels émetteurs espacés les uns des autres sur l'engin dans la direction principale longitudinale et/ou dans la direction transversale.

Selon les réalisations, l'antenne réceptrice a une direction principale de réception sensiblement perpendiculaire à la direction longitudinale à l'endroit de communication, l'antenne réceptrice à une direction principale de réception sensiblement parallèle à la direction principale d'émission d'une antenne émettrice passant ou se trouvant dans l'endroit de communication de la voie associé à l'antenne réceptrice, l'antenne réceptrice à une direction principale de réception en oblique par rapport à la direction longitudinale à l'endroit de communication et/ou à la direction principale d'émission d'une antenne émettrice passant ou se trouvant dans l'endroit de communication de la voie associé à l'antenne réceptrice.

Selon les réalisations, le système de diagnostic a une antenne réceptrice unique ou deux antennes réceptrices disposées au voisinage l'une de l'autre, en particulier des antennes réceptrices analogues, formant un ensemble fonctionnel récepteur.

Dans cette réalisation et selon les cas, les deux antennes réceptrices ont des directions principales de réception sensiblement parallèles entre elles, ou sensiblement perpendiculaires ou en oblique l'une par rapport à l'autre. Selon les réalisations, les deux antennes réceptrices ont des directions principales de réception sensiblement symétriques l'une de l'autre par rapport à une direction transversale perpendiculaire à la direction longitudinale à l'endroit de communication ou des directions principales de réception sensiblement symétriques l'une de l'autre par rapport à la direction principale d'émission d'une antenne émettrice passant ou se trouvant dans l'endroit de communication de la voie associé aux deux antennes réceptrices.

Selon une réalisation, le système de diagnostic comporte une pluralité d'antennes réceptrices ou d'ensembles fonctionnels récepteurs espacés les uns des autres le long de la voie, dans la direction longitudinale et/ou transversale.

Selon les réalisations, le moyen de calcul et d'analyse est soit dissocié structurellement de l'engin, et l'antenne émettrice émet ladite donnée caractéristique soit embarqué sur l'engin, et l'antenne émettrice émet ladite information de diagnostic.

Selon une réalisation et une caractéristique, le moyen de mesure de la valeur d'un paramètre des conditions de roulage de l'unité de roulement est adapté à mesurer la vitesse de rotation de l'unité de roulement.

Selon un deuxième aspect, l'invention a pour objet un engin à roues sur lequel est implantée une unité de roulement, apte à se déplacer sur une voie, en particulier un véhicule ferroviaire :
▪ qui comprend, embarqués sur lui :
   o un moyen de mesure de la valeur d'un paramètre des conditions de roulage de l'unité de roulement caractéristique de son état structurel, embarqué sur l'engin et associé à l'unité de roulement, apte à mesurer ladite valeur dudit paramètre et à fournir une donnée caractéristique desdites conditions de roulage,
   o et une antenne émettrice de ladite donnée caractéristique ou d'une information de diagnostic fournie par un moyen de calcul et d'analyse à partir de ladite donnée caractéristique, dans une direction principale d'émission et un lobe principal d'émission, positionnée sur l'engin avec la direction principale d'émission en oblique par rapport à la direction principale longitudinale de l'engin,
▪ qui fait partie d'un système de diagnostic tel qu'il a été décrit.

Selon une réalisation, l'engin comprend au moins deux antennes émettrices, en particulier des antennes émettrices analogues, formant un ensemble fonctionnel émetteur.

Selon une réalisation, l'engin comprend une pluralité d'unités de roulement et une pluralité d'antennes émettrices ou d'ensembles fonctionnels émetteurs espacés les uns des autres sur l'engin, dans sa direction principale longitudinale et/ou dans la direction transversale.

Selon une réalisation, une antenne émettrice est embarquée sur l'engin à roues en étant située latéralement, vers l'extérieur et le bas.

Selon une réalisation, le moyen de calcul et d'analyse est embarqué sur l'engin, et l'antenne émettrice émet ladite information de diagnostic.

Selon un troisième aspect, l'invention a plus généralement pour objet un système d'antennes - antenne émettrice et antenne réceptrice - dont une première antenne est apte et destinée à être embarquée sur un engin à roues associé à une voie et une seconde antenne est apte et destinée à être dissociée structurellement de l'engin et localisée dans ou à proximité d'un endroit de communication de la voie ayant une direction longitudinale, dans lequel :
▪ la première antenne est ponctuelle, directionnelle moyennant une direction principale de communication et un lobe principal de communication, et positionnée par rapport à la voie avec la direction principale en oblique par rapport à la direction longitudinale à l'endroit de communication et avec le lobe principal croisant la seconde antenne en biais,
▪ la seconde antenne est ponctuelle et agencée de sorte à se trouver dans le lobe principal de la première antenne au moment où celle-ci passe ou se trouve dans l'endroit de communication de la voie.

Un tel système d'antennes est spécialement destiné à faire partie d'un système de diagnostic tel que précédemment décrit.

On décrit maintenant brièvement les figures des dessins.

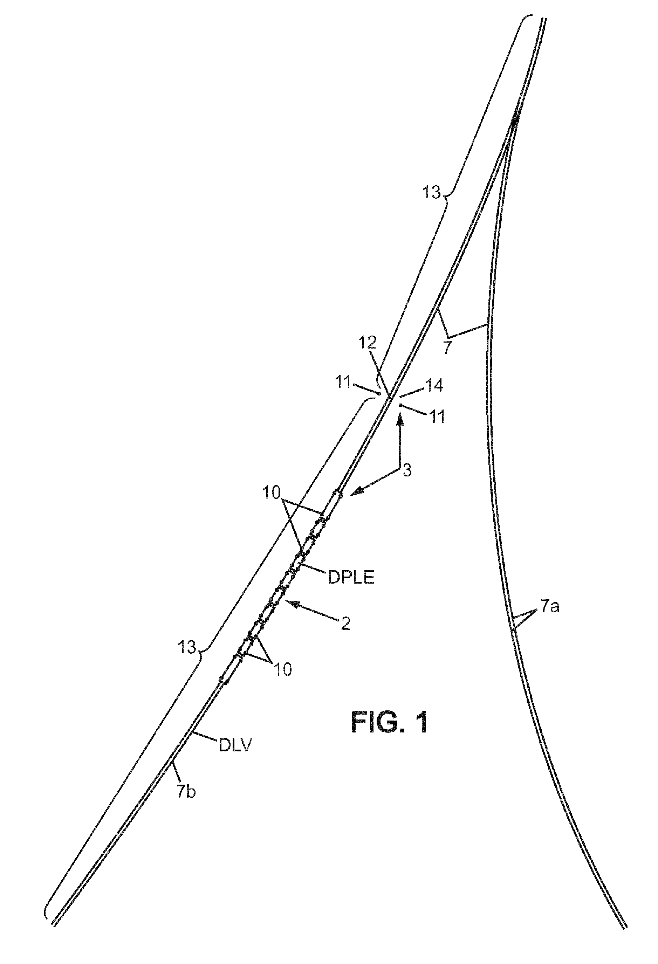

La figure 1 est un schéma représentant deux voies ferrées et un train comprenant un système de diagnostic incorporant un système d'antennes avec une pluralité d'antennes émettrices ponctuelles, embarquées sur le train, sur chacun de ses deux côtés longitudinaux, et deux antennes ponctuelles réceptrices au sol (ou ce qui en tient lieu), localisées à proximité d'un endroit de communication de la voie, de part et d'autre de celle-ci.

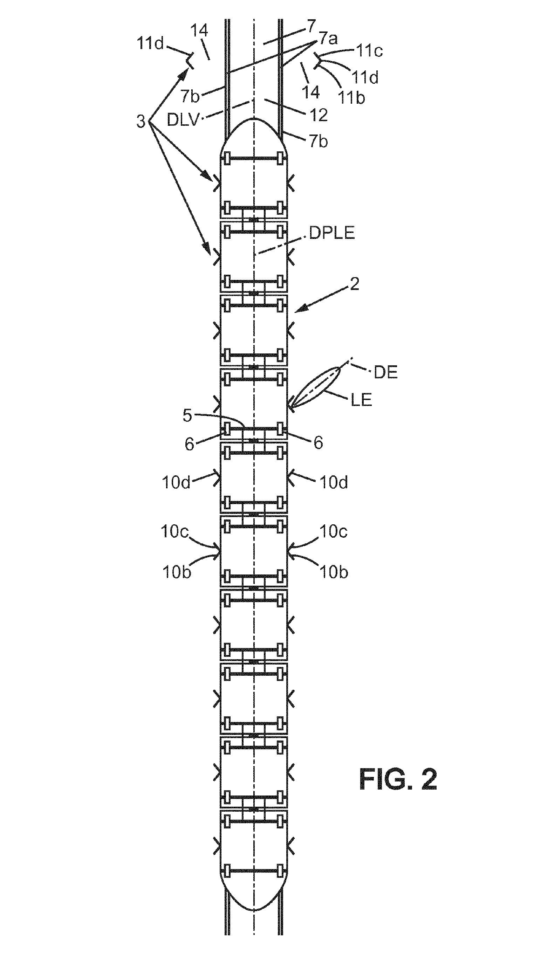

La figure 2 est un schéma représentant un train tel que celui de la figure 1, avec, une pluralité d'ensembles fonctionnels émetteurs de deux antennes émettrices ponctuelles chacun, embarqués sur le train et espacés les uns des autres sur le train dans sa direction principale longitudinale et dans sa direction transversale étant sur chacun des deux côtés longitudinaux du train, associés aux boggies du train, et deux ensembles fonctionnels récepteurs de deux antennes ponctuelles réceptrices chacun, situées au sol (ou ce qui en tient lieu) et localisées à proximité d'un endroit de communication de la voie, de part et d'autre de celle-ci.

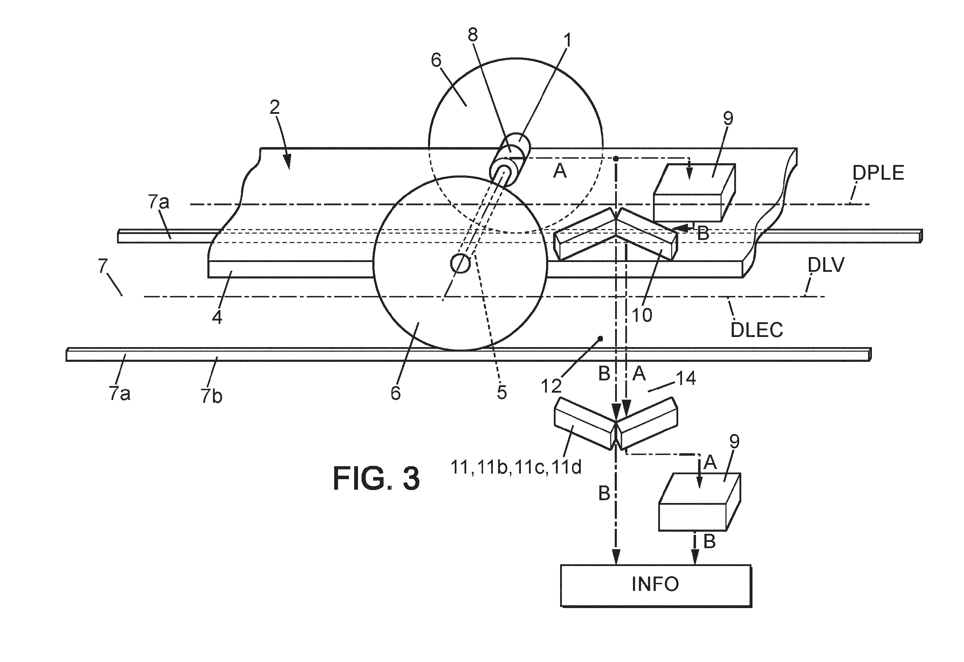

La figure 3 est un schéma structurel et fonctionnel illustrant le système de diagnostic selon deux variantes alternatives avec le moyen de de calcul et d'analyse qui est soit embarqué sur le véhicule ferroviaire soit dissocié structurellement de lui, et une réalisation possible du système d'antennes avec deux antennes émettrices ponctuelles, embarquées sur le véhicule ferroviaire sur un côté longitudinal, associées à un essieu du véhicule ferroviaire, et deux antennes réceptrices ponctuelles, situées au sol (ou ce qui en tient lieu) et localisées à proximité d'un endroit de communication de la voie, d'un côté de celle-ci.

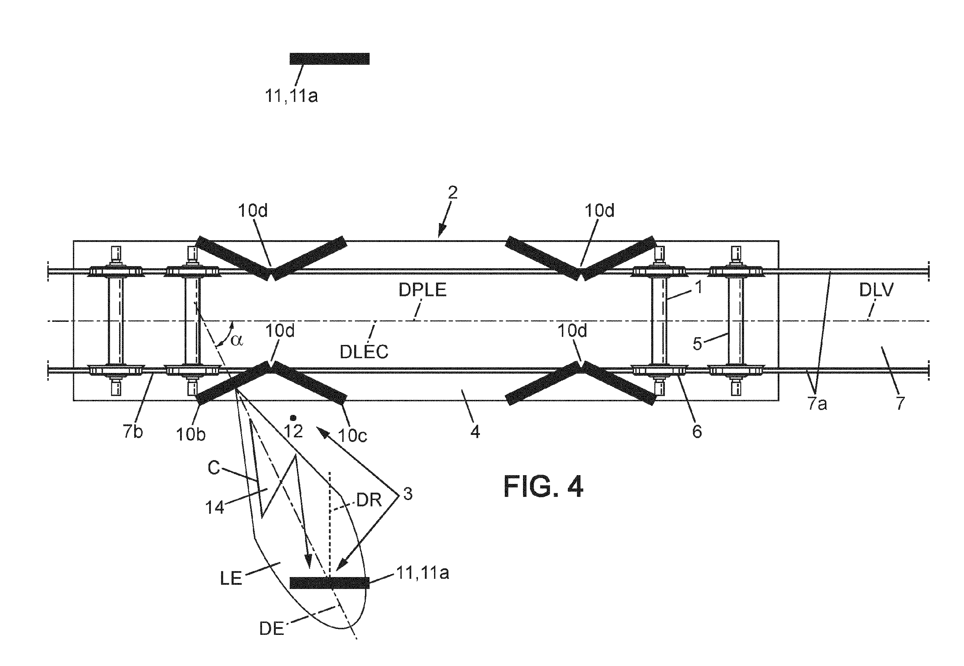

La figure 4 est un schéma illustrant la voie à - et vers - l'endroit de communication, un véhicule ferroviaire, et une réalisation possible du système d'antennes avec quatre ensembles fonctionnels émetteurs de deux antennes émettrices ponctuelles chacun et deux antennes réceptrices ponctuelles, situées au sol et localisées à proximité d'un endroit de communication de la voie, des deux côtés de celle-ci, le schéma montrant la direction principale d'émission et le lobe principal d'émission d'une antenne émettrice et son positionnement en oblique par rapport à la direction longitudinale à l'endroit de communication, ainsi que le positionnement d'une antenne réceptrice dans le lobe principal d'émission, au moment où l'antenne émettrice est localisée dans l'endroit de communication de la voie, de sorte que le lobe principal d'émission croise l'antenne réceptrice en biais,

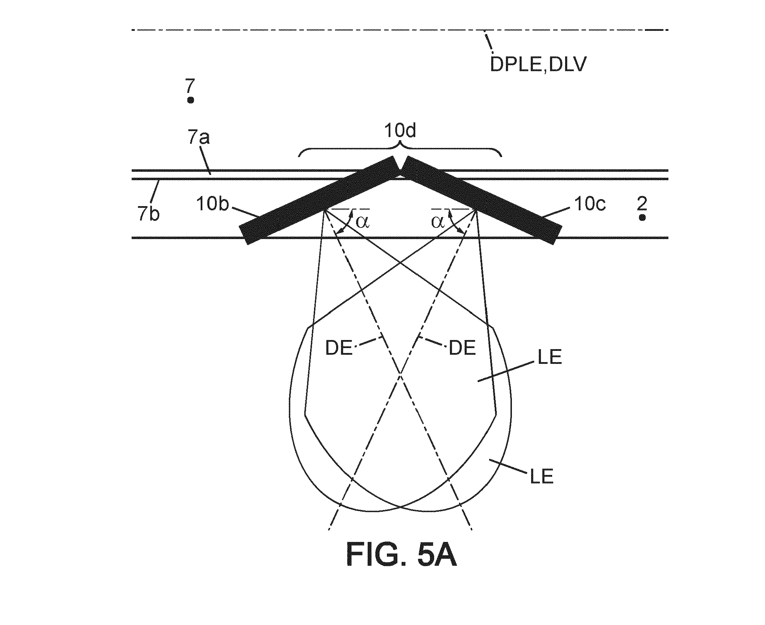

Les figures 5A à 5D sont quatre schémas partiels simplifiés illustrant quatre variantes de réalisation possibles d'antenne émettrice, ces variantes de réalisation n'étant pas limitatives.

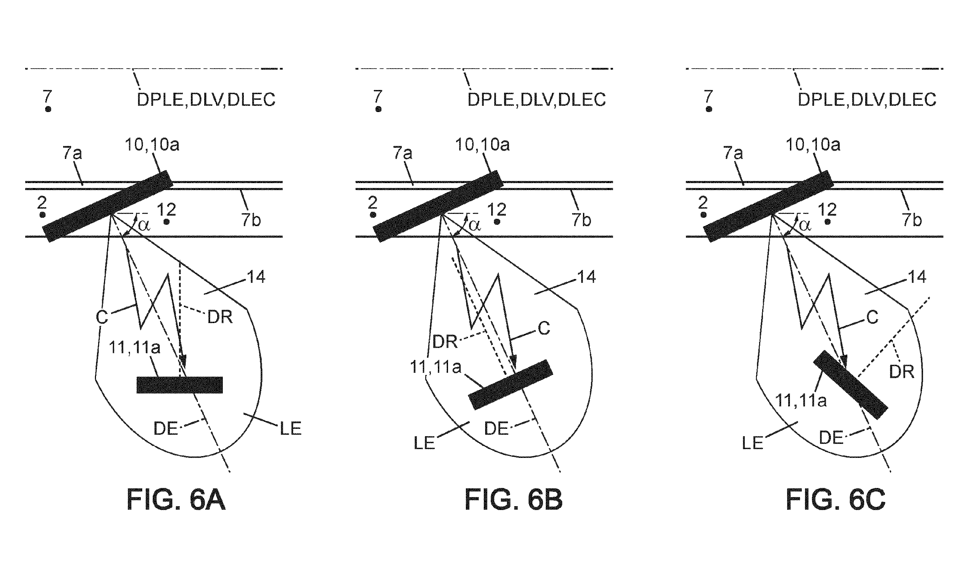

Les figures 6A à 6F sont six schémas partiels simplifiés illustrant, à l'endroit de communication de la voie, six variantes de réalisation possibles d'antenne réceptrice, ici associées à une antenne émettrice unique, ces variantes de réalisation n'étant pas limitatives.

Un système de diagnostic de l'état structurel présent ou prévisionnel d'une unité de roulement 1 implantée sur un engin à roues 2 pour son déplacement, comprenant un système d'antennes 2, est représentée sur la figure 3 de façon purement schématique, dans le cas où l'engin à roues 2 est un véhicule ferroviaire. Un tel véhicule ferroviaire 2 comprend, notamment, un élément de structure portante (châssis) 4, un essieu 5 supportant deux roues 6, par l'intermédiaire d'unités de roulement 1. Cet essieu 5 peut être simplement porteur, ou bien il peut être moteur et/ou directeur. Les roues 6 sont aptes à rouler sur une voie 7 constituée de rails 7a.

Si, dans le contexte de l'invention, l'engin à roues 2 est typiquement un véhicule ferroviaire, comme il a été précédemment défini (voiture, wagon, locomotive ou motrice pour le transport ferroviaire, tout ensemble de ceux-ci, attelés et formant un convoi ferroviaire, tel qu'un train), il peut s'agir, plus généralement, d'un engin mobile et/ou automobile tel qu'un chariot de transport ou de manutention ou un camion, cette liste n'étant pas limitative. De façon typique, un tel engin à roues 2 comporte une pluralité d'unités de roulement 1 et, dans le cas d'un véhicule ferroviaire 2, plusieurs essieux 5 agencés en plusieurs boggies.

Dans le contexte de l'invention, un tel véhicule ferroviaire 2 peut se déplacer sur la voie 7, à grande vitesse, par exemple à une vitesse comprise dans la fourchette 300 km/h - 600 km/h. Comme il a été exposé, cette fourchette n'est donnée qu'à titre illustratif et elle n'est nullement limitative. Ainsi, dans d'autres contextes possibles, la vitesse peut être inférieure, et le cas échéant nettement inférieure, par exemple de l'ordre de 50 km/h.

En outre, dans le contexte de l'invention, le système de diagnostic, dont le système d'antennes 3, peut être installé aussi bien en première monte qu'en seconde monte sur l'engin à roues 2, en particulier le véhicule ferroviaire, et la voie 7, l'un et l'autre déjà existants.

Le système à antennes 3 est adapté pour fonctionner avec des engins à roues 2, en particulier des véhicules ferroviaires, différents les uns des autres.

Dans le contexte de l'invention, l'on entend par « unité de roulement », un ensemble constituant un roulement ou incluant un roulement et comprenant typiquement, au moins, une bague externe et une bague interne, les deux bagues étant coaxiales et espacées radialement, et une pluralité de corps roulants interposés entre les deux bagues et coopérant avec des chemins de roulement ménagés sur celles-ci, moyennant généralement une cage de roulement.

Dans le contexte de l'invention, une telle unité de roulement 1 est implantée sur l'engin à roues 2, étant portée par la structure portante de l'engin (châssis) 4 et, en particulier, portant l'essieu 5.

L'engin a roues 2 comporte une direction principale longitudinale DPLE entre l'avant et l'arrière et qui est également la direction de son déplacement le long de la voie 7. Cette direction principale longitudinale DPLE est sensiblement droite, ou formée de plusieurs tronçons successifs sensiblement droits, pouvant être dans le prolongement les uns des autres ou bien inclinés les uns par rapport aux autres, selon la disposition de l'engin à roues 2. L'engin à roues 2 s'étend le long de cette direction principale longitudinale DPLE sur une longueur de l'ordre de quelques mètres (chariot de transport ou petit véhicule automobile), à une dizaine ou quelques dizaines de mètres (camion), et jusqu'à atteindre de l'ordre de 500 mètres (cas d'un convoi ferroviaire).

Lorsque l'engin à roues 2 comporte une pluralité d'unités de roulement 1 associées par exemple à plusieurs essieux 5, ces unités de roulement 1 sont espacées les unes des autres sur l'engin à roues 2 dans la direction principale longitudinale DPLE, et le cas échéant dans la direction transversale, le qualificatif « transversal » devant être compris comme croisant la direction principale longitudinale DPLE. Par exemple, pour un véhicule ferroviaire 2, le nombre des unités de roulement 1 à diagnostiquer peut atteindre une cinquantaine ou une centaine, répartis sur une longueur qui peut être comprise dans la fourchette 300 m - 500 m, avec des espacements qui peuvent être de l'ordre d'un ou de deux mètres ou bien de l'ordre de quinze à vingt mètres.

Dans le cas d'un engin à roues 2 étant un véhicule ferroviaire, les roues 6 reposent et sont guidées par une paire de rails 7a sur un ballast (ou ce qui en tient lieu), ce qui constitue la voie 7, en l'espèce une voie ferrée 7. Une telle voie ferrée 7 comporte une direction longitudinale DLV qui définit la direction du déplacement de l'engin ferroviaire 2. Sur une longueur de l'ordre de quelques fois à une dizaine de fois la longueur de l'engin ferroviaire 2, cette direction longitudinale DLV est sensiblement droite ou bien est incurvée dans la mesure requise et permise par le déplacement de l'engin ferroviaire 2, ou bien elle est formée de plusieurs tronçons successifs sensiblement droits ou incurvés. Une telle voie ferrée 7 s'étend le long de la direction longitudinale DLV sur une longueur pouvant être importante, par exemple de l'ordre de plusieurs dizaines ou de plusieurs centaines de kilomètres. Une telle voie ferrée 7 fait d'un réseau de voies ferrées constitué de plusieurs voies. Ce qui vient d'être exposé pour une voie ferrée 7 peut être transposé et adapté pour les voies 7 autres que les voies ferrées, en adéquation aux autres réalisations d'engin à roues 2 envisagées. Aussi, dans le contexte de l'invention, l'on entend par « voie » un espace apte au déplacement de l'engin à roues 2, notamment un espace aménagé et adapté pour permettre ou faciliter le déplacement de l'engin à roues 2. Voie ferroviaire 7 constituée de rails 7a dans le cas d'un engin ferroviaire 2 ou, par exemple, piste dans le cas d'un engin à roues 2 tel qu'un chariot, ou chaussée dans le cas d'un engin à roues 2 tel qu'un camion.

Lorsque l'engin à roues 2 est amené à se déplacer ou à être déplacé sur la voie 7, l'unité de roulement 1 ou les unités de roulement 1 sont en fonctionnement rotatif.

Dans le contexte de l'invention, l'on entend par état « structurel » d'une unité de roulement 1, l'état de l'unité de roulement 1 eu égard à une caractéristique propre de celle-ci ayant un effet sur ses conditions de roulement. De façon typique, l'état structurel est la présence ou l'importance d'une altération de l'état de surface des chemins de roulement, de la bague, ou des corps roulants eux-mêmes, tel qu'un écaillage, ou une détérioration plus ou moins importante de la cage du roulement, qui peut avoir pour effet une irrégularité de la rotation, voire son blocage et *in fine* une destruction plus ou moins importante de l'unité de roulement 1. L'initiation d'une telle altération de l'unité de roulement 1 est peu décelable voire invisible à l'oeil outre d'ailleurs qu'elle peut être masquée à la vue par des organes de l'unité de roulement 1 ou de l'engin à roues 2 sur lequel il est implanté. Une telle altération de l'unité de roulement 1 peut apparaître pour nombre de raisons, et de façon impromptue. Elle peut se dégrader de façon plus ou moins rapide. Et, elle peut perturber le bon fonctionnement de l'unité de roulement 1, et donc de l'engin à roues 2, voire mettre en cause la sécurité.

Dans le contexte de l'invention, l'on entend par « diagnostic » de l'état structurel d'une unité de roulement 1, la conclusion tirée sur la nature ou le degré de cet état structurel, comparativement soit à l'état structurel théorique parfait, notamment d'origine, de l'unité de roulement 1 soit à un état structurel considéré comme significatif, et notamment problématique ou plus ou moins critique, au regard d'un fonctionnement normal ou de la sécurité ou de la maintenance ou de la nécessité de remplacer ou de prévoir de remplacer l'unité de roulement 1 par une unité de roulement 1 neuve ou du moins ayant un état structurel convenable.

Le diagnostic de l'état structurel peut être présent ou prévisionnel. L'état structurel présent se réfère à celui, réel, qui est contemporain du diagnostic ou bien de la (ou des) mesure(s) qui le permet(tent). L'état structurel prévisionnel se réfère à celui, prospectif, qui peut être déduit d'une (ou de) mesure(s) et d'une loi d'évolution donnée de l'état structurel en fonction de la rotation de l'unité de roulement 1.

Ainsi, dans le contexte de l'invention et dans une application typique, l'on vise à tirer une conclusion sur la nature ou le degré de l'état structurel, prévisionnel, de chacune des unités de roulement 1 de l'engin à roues 2, au regard de la normalité du fonctionnement ou de la sécurité ou de la maintenance ou du remplacement.

Le système de diagnostic est décrit en détail plus spécialement en relation avec une unique unité de roulement 1, cette description pouvant être transposée au cas où l'engin à roues 2 comporte plusieurs unités de roulement 1, le système de diagnostic pouvant alors être individuel et séparé pour chaque unité de roulement 1 ou, pour partie, commun à plusieurs unités de roulement 1, un ou plusieurs moyens du système étant communs à une pluralité d'unités de roulement 1.

Le système de diagnostic comprend, d'abord, un moyen de mesure 8 de la valeur d'un paramètre des conditions de roulage de l'unité de roulement 1 caractéristique de son état structurel.

En l'espèce, le moyen de mesure 8 inclut un capteur de vitesse de rotation de l'unité de roulement 1, étant couplé à un codeur mobile de l'unité de roulement 1.

Le moyen de mesure 8 est embarqué sur l'engin à roues 2 et associé à l'unité de roulement 1.

Le moyen de mesure 8 est apte à mesurer ladite valeur dudit paramètre (entrée) et à fournir (sortie) une donnée caractéristique A desdites conditions de roulage.

Le système de diagnostic comprend, ensuite, un moyen de calcul et d'analyse 9, apte, à partir de ladite donnée caractéristique A, à fournir une information de diagnostic B de l'état structurel présent ou prévisionnel de l'unité de roulement 1, dans le sens qui a été donné précédemment à ces termes.

Selon les cas, le moyen de calcul et d'analyse 9 est embarqué sur l'engin à roues 2 ou bien il est dissocié structurellement de lui. Ces deux réalisations sont représentées sur la même figure 1.

Le système de diagnostic comprend, ensuite, une antenne ponctuelle directionnelle émettrice 10. Une telle antenne émettrice 10 est embarquée sur l'engin à roues 2, en particulier située latéralement, vers l'extérieur et le bas, dans une zone proche de la voie 7 et du sol (ou ce qui en tient lieu), de sorte à communiquer efficacement avec l'antenne réceptrice 11.

Elle est apte à émettre la donnée caractéristique A ou l'information de diagnostic B, ou un signal qui le représente, dans une direction principale d'émission DE et un lobe principal d'émission LE.

On entend par le qualificatif de « ponctuel » appliqué à l'antenne émettrice 10, le fait que, au regard de la taille de l'engin à roues 2 et de la voie 7, l'antenne émettrice 10 se présente comme un point ou s'inscrit dans une enveloppe qui est perçue comme pouvant être assimilée à un point, ou proche d'un point, comme illustré par les figures 1 et 2. Par conséquent, le qualificatif de « ponctuel » exclut par exemple un guide d'ondes.

Selon les arrangements du système de diagnostic, les données transférées sont la donnée caractéristique A ou bien l'information de diagnostic B. Le premier cas est typique de l'arrangement où le moyen de calcul et d'analyse 9 est dissocié structurellement de l'engin à roues 2. Le second cas est typique de l'arrangement où le moyen de calcul et d'analyse 9 est embarqué sur l'engin à roues 2.

Selon les cas, d'une part, l'antenne émettrice, sous la référence numérique générique 10, peut être une antenne émettrice unique 10a (figures 6A à 6F) ou deux antennes émettrices 10b et 10c (figures 3, 4, 5A à 5D), en particulier analogues, formant alors un ensemble fonctionnel émetteur 10d. Bien entendu, l'invention comprend également le cas où l'ensemble fonctionnel émetteur 10d comprend plus de deux antennes émettrices.

Selon les cas, d'autre part, lorsque l'engin à roues 2 comporte une pluralité d'unités de roulement 1, le système de diagnostic, y compris le système d'antennes 3, peut comporter également une pluralité d'antennes émettrices 10, 10a, 10b ou d'ensembles fonctionnels émetteurs 10d, espacés les uns des autres sur l'engin à roues 2. Cet espacement s'entend dans la direction principale longitudinale DPLE par exemple pour la pluralité d'essieux 5 ou de boggies. Cet espacement peut également s'entendre dans la direction transversale par exemple d'un côté et de l'autre de l'engin à roues 2, longitudinalement.

Ces deux aspects, d'une part antenne émettrice unique 10a ou multiple (en particulier double) ou ensemble émetteur 10d, d'autre part engin à roues 2 à une antenne émettrice 10 ou à pluralité d'antennes émettrices 10, 10a, 10b ou d'ensembles fonctionnels émetteurs 10d, espacés, s'appliquent chacun pour ce qui le concerne (l'un ou l'autre) ou en combinaison (l'un et l'autre).

Enfin, selon les cas, les deux antennes émettrices 10b et 10c sont les deux parties distinctes d'une même structure ou sont deux structures distinctes l'une de l'autre.

Le système de diagnostic comprend, ensuite, une antenne ponctuelle réceptrice 11, dissociée structurellement de l'engin à roues 2, et localisée dans ou à proximité d'un endroit de communication 12 de la voie 7.

On entend par « endroit de communication », une partie déterminée de la voie 7, dans sa longueur et sa direction longitudinale DLV, où intervient la communication entre l'antenne émettrice 10 et l'antenne réceptrice 11, alors que celles-ci sont à proximité l'une de l'autre (voir figures 1 à 4 et 6A à 6F). Par « partie déterminée » de la voie 7, l'on entend que l'endroit de communication 12 est quelque peu précis, fixé et circonscrit. Par conséquent, l'endroit de communication 12 n'est pas constitué par toute la voie ou substantiellement toute la voie 7. Et il n'est pas davantage vague ou non établi.

En dehors du ou des endroits de communication 12, la voie 7 forme une ou des zones de non communication 13 (relativement au système d'antennes 3), le plus souvent de grandes longueurs et occupant la plus grande partie de la longueur de la voie 7. Cependant, l'invention est également applicable dans le cas où il est prévu un plus grand nombre d'endroits de communication 12 et des zones de non communication 13 de longueurs plus petites.

Au regard de la longueur de la voie 7 dans la direction longitudinale DLV, l'endroit de communication 11 peut être qualifié de ponctuel ou de sensiblement ponctuel. Par-là, l'on entend que, au regard de la taille de l'engin à roues 2 et de la voie 7, l'endroit de communication 12 se présente comme un point ou s'inscrit dans une enveloppe qui est perçue comme pouvant être assimilée à un point, ou proche d'un point, comme illustré par les figures 1 et 2.

Par conséquent, le qualificatif de « ponctuel » exclut par exemple un tronçon de la voie 7 de longueur substantielle.

Par « localisé dans ou à proximité de l'endroit de communication 12 de la voie », l'on entend ce qui est sur la voie 7 à proprement parler, ou à l'aplomb et adjacent à la voie 7, ou encore ce qui est structurellement en dehors de la voie 7 mais au voisinage d'elle, au sens où une antenne réceptrice 11 se trouvant dans cette localisation peut se trouver dans le lobe d'émission LE d'une antenne émettrice 10. Par exemple, et de façon typique (voir figures 2 à 4 et 6A à 6F), l'endroit de communication 12 est en dehors de la voie 7, au sol ou ce qui en tient lieu, et écarté du bord longitudinal 7b le plus proche de la voie 7 par un espace 14 qui, dans le cas d'un engin ferroviaire 2, peut être de l'ordre de 1 m à 5 m, voire davantage, en fonction de la longueur du lobe principal d'émission LE, comptée le long de la direction principale d'émission DE.

L'endroit de communication 11 comporte une direction longitudinale DLEC qui est la direction longitudinale de la voie 7 à l'endroit de communication 11. Lorsque l'engin à roues 2 se trouve à l'endroit de communication, sa direction principale longitudinale DPLE et la direction longitudinale endroit de communication DLEC coïncident peu ou prou (voir figures 4 et 6A à 6F).

L'antenne réceptrice 11 est apte à recevoir la donnée caractéristique A ou l'information de diagnostic B, ou un signal qui le représente, émise par une antenne émettrice 10 (voir la flèche C symbolique sur les figures 4 et 6A à 6F), dès lors que, par rapport à la voie 7 et à l'engin 2, elle est agencée de sorte à se trouver dans le lobe principal d'émission LE de l'antenne émettrice 10 en question, au moment où l'engin 2, et en particulier au moment où l'antenne émettrice 10 en question, passe ou se trouve dans l'endroit de communication 12 de la voie 7.

Il est entendu qu'est communiqué et transmis entre une antenne émettrice 10 et une antenne réceptrice 11 dans ou à proximité d'un endroit de communication 12, la donnée caractéristique A, l'information de diagnostic B, ou bien un signal qui représente cette donnée ou cette information.

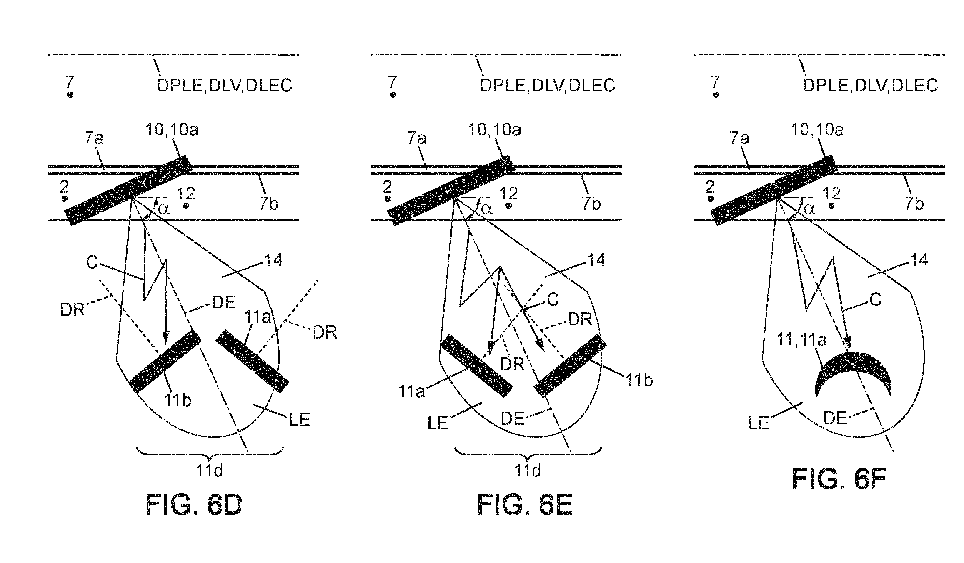

Selon les cas, d'une part, l'antenne réceptrice, sous la référence numérique générique 11, peut être une antenne réceptrice unique 11a a (figures 4, 6A à 6C et 6F) ou deux antennes réceptrices 11b et 11c disposées au voisinage l'une de l'autre (figures 2, 3, 4, 6D et 6E), en particulier analogues, formant alors un ensemble fonctionnel récepteur 11d. Bien entendu, l'invention comprend également le cas où l'ensemble fonctionnel récepteur 11d comprend plus de deux antennes réceptrices.

Selon les cas, d'autre part, lorsque l'engin à roues 2 comporte des antennes émettrices ou des ensembles fonctionnels émetteurs 10, 10a, 10b et 10d, espacés dans la direction transversale pour être situés d'un côté et de l'autre de l'engin à roues 2, longitudinalement, le système de diagnostic, y compris le système d'antennes 3, peut comporter également des antennes réceptrices ou des ensembles fonctionnels récepteurs 11, 11a, 11b et 11, espacés les uns des autres dans la direction transversale par exemple d'un côté et de l'autre de la voie 7 (figures 1 et 2).

Ces deux aspects, d'une part antenne réceptrice unique 11a ou multiple (en particulier double) ou ensemble récepteur 11d, d'autre part pluralité d'antennes réceptrice 11 ou d'ensembles fonctionnels récepteurs 11, espacés, s'appliquent chacun pour ce qui le concerne (l'un ou l'autre) ou en combinaison (l'un et l'autre). L'antenne émettrice 10 est positionnée par rapport à l'engin à roues 2 et à la voie 7 avec la direction principale d'émission DE en oblique, c'est-à-dire en biais, par rapport à la direction longitudinale à l'endroit de communication DLEC, un angle α non droit étant formé entre les deux directions DE et DLEC, comme représenté tout spécialement sur la figure 4. Par suite, le lobe principal d'émission LE croise l'antenne réceptrice 11 en biais (voir figures 4, et 6A à 6F), et non pas perpendiculairement. Ce faisant, il est possible de faire en sorte que, toutes choses égales par ailleurs, la durée pendant laquelle l'antenne réceptrice 11 se trouve dans le lobe principal d'émission LE est augmentée, ce qui contribue à ce que le recueil de la donnée caractéristique A ou de l'information de diagnostic B par l'antenne réceptrice 11 est assuré de façon plus effective et plus sûre.

L'invention porte tout d'abord sur le système de diagnostic.
L'invention porte également sur l'engin à roues 2 sur lequel est implantée l'unité de roulement 1, qui comprend, embarqués sur lui, le moyen de mesure 8 associé à l'unité de roulement 1, et une antenne émettrice 10 telle que décrite, positionnée sur l'engin à roues 2 avec la direction principale d'émission DE en oblique par rapport à la direction principale longitudinale de l'engin DPLE. Un tel engin à roues peut faire partie d'un tel système de diagnostic.

Les autres caractéristiques décrites en relation avec le système de diagnostic permettent le cas échéant de caractériser l'engin à roues 2 lui-même.

Comme indiqué, dans une réalisation, l'engin à roues 2 est un véhicule ferroviaire.

L'invention porte également sur le système d'antennes 3 qui comprend l'antenne émettrice 10 et l'antenne réceptrice 11. Une première antenne, notamment l'antenne émettrice 10, est apte et destinée à être embarquée sur l'engin à roues 2 associé à la voie 7 et une seconde antenne, notamment l'antenne réceptrice 11, est apte et destinée à être dissociée structurellement de l'engin à roues 2 et localisée dans ou à proximité de l'endroit de communication 12 de la voie 7 ayant la direction longitudinale DLEC.

Comme indiqué, la première antenne 10 est ponctuelle, directionnelle moyennant une direction principale de communication DE et un lobe principal de communication LE, et positionnée par rapport à la voie 7 avec la direction principale DE en oblique par rapport à la direction longitudinale à l'endroit de communication DLEC et avec le lobe principal LE croisant la seconde antenne 11, en biais. Et, la seconde antenne 11 est ponctuelle et agencée de sorte à se trouver dans le lobe principal LE de la première antenne 10 au moment où celle-ci passe ou se trouve dans l'endroit de communication 12 de la voie 7.

Un tel système d'antennes 3 est spécialement destiné à faire partie du système de diagnostic, lorsque la première antenne 10 est une antenne émettrice de la donnée caractéristique A ou de l'information de diagnostic B relative à une unité de roulement 1 de l'engin à roues 2.

On décrit maintenant d'autres modes de réalisation de l'invention, pouvant le cas échéant se combiner entre eux, lorsque cela n'est pas manifestement exclu. Ces modes de réalisation ne sont nullement limitatifs.

Selon des réalisations, la direction principale d'émission DE est inclinée par rapport à la direction longitudinale à l'endroit de communication DLEC avec un angle α compris entre 20° et 70°, et plus particulièrement compris entre 35° et 65°.

Selon une première réalisation, l'antenne émettrice 10 est portée par l'engin à roues 2 de façon relative fixe, alors que selon une seconde réalisation, l'antenne émettrice 10 est portée par l'engin à roues 2 de façon relative mobile et blocable en position. Dans ce cas, le système de diagnostic, y compris le système d'antennes 3, comporte un moyen de liaison antenne émettrice-engin qui est mobile ou déformable et un moyen de blocage en position relative fixe antenne émettrice-engin apte à être rendu actif lorsque souhaité. Par exemple, l'antenne émettrice 10 est portée par l'engin à roues 2 de façon relative mobile à pivotement, en particulier autour d'un axe vertical ou sensiblement vertical.

Dans cette seconde réalisation et lorsqu'il est prévu deux antennes émettrices 10b et 10c, il peut être prévu que les deux moyens de liaison antenne émettrice-engin de celles-ci sont mobiles ou déformables et agencés ou commandés pour un déplacement analogue simultané des deux antennes émettrices. Si les deux moyens de liaison antenne émettrice-engin peuvent être agencés ou commandés pour un fonctionnement synchrone des deux antennes émettrices 10b et 10c, ils peuvent également être agencés ou commandés pour un fonctionnement asynchrone.

Selon une réalisation, il est prévu un moyen de commande du fonctionnement de l'antenne émettrice 10 de façon permanente ou de façon temporaire pendant des phases d'émission commandées soit à des intervalles de temps réguliers soit à la demande soit en réponse à un facteur contextuel.

Selon une réalisation, deux antennes émettrices 10b et 10c ont des directions principales d'émission DE qui sont sensiblement parallèles entre elles. Dans un cas extrême, les deux antennes émettrices 10b et 10c sont coplanaires ou dans deux plans parallèles et ont des directions principales d'émission DE qui sont sensiblement parallèles à la direction transversale perpendiculaire à la direction longitudinale à l'endroit de communication DLEC.

Selon une autre réalisation, deux antennes émettrices 10b et 10c ont des directions principales d'émission DE qui sont sensiblement perpendiculaires ou en oblique l'une par rapport à l'autre, comme il est représenté sur les figures 4, 5A à 5D. En particulier, ces deux directions principales d'émission DE sont sensiblement symétriques l'une de l'autre par rapport à la direction transversale perpendiculaire à la direction longitudinale à l'endroit de communication DLEC. Par exemple, ces deux directions principales d'émission DE forment entre elles un angle obtus, de l'ordre de 120°, comme il est représenté sur les figures 4, 5A à 5D.

Selon une autre réalisation, deux antennes émettrices 10b et 10c ont des directions principales d'émission DE positionnées sur l'engin à roues 2 en oblique par rapport à la direction longitudinale à l'endroit de communication DLEC, selon deux angles d'inclinaison sensiblement identiques par rapport à la direction longitudinale à l'endroit de communication DLEC, et l'un ou l'autre ou l'un et l'autre des sens, comme il est également représenté sur les figures 4, 5A à 5D.

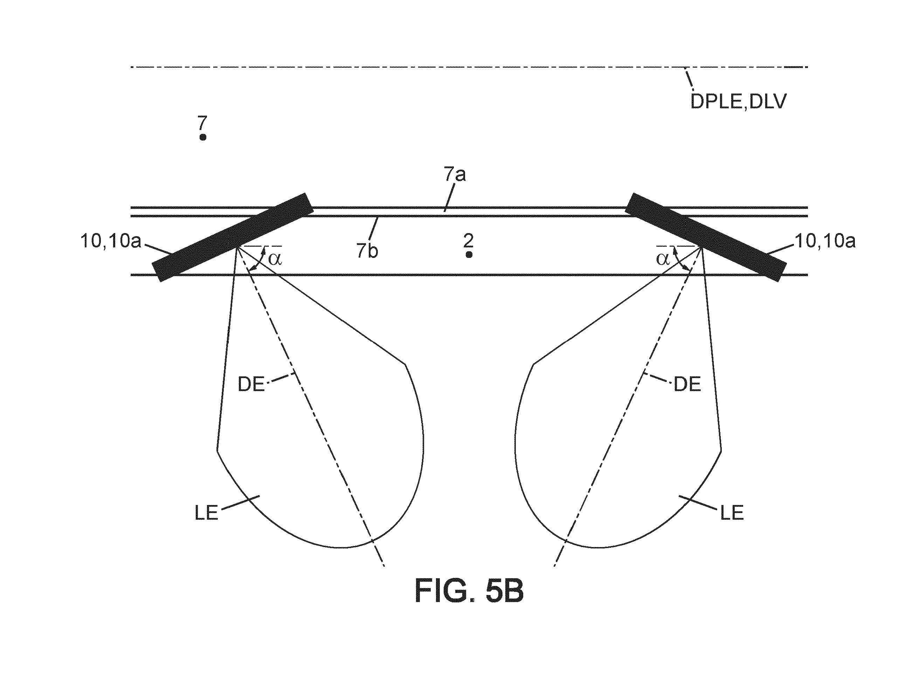

Selon une première réalisation, deux antennes émettrices 10b et 10c ont des lobes d'émission principaux LE qui se recouvrent partiellement, ou se tangentent, en particulier vers leurs parties distales, comme il est représenté sur la figure 5A, alors que selon une seconde réalisation, les deux lobes d'émission principaux LE ne se recouvrent pas, comme il est représenté sur la figure 5B.

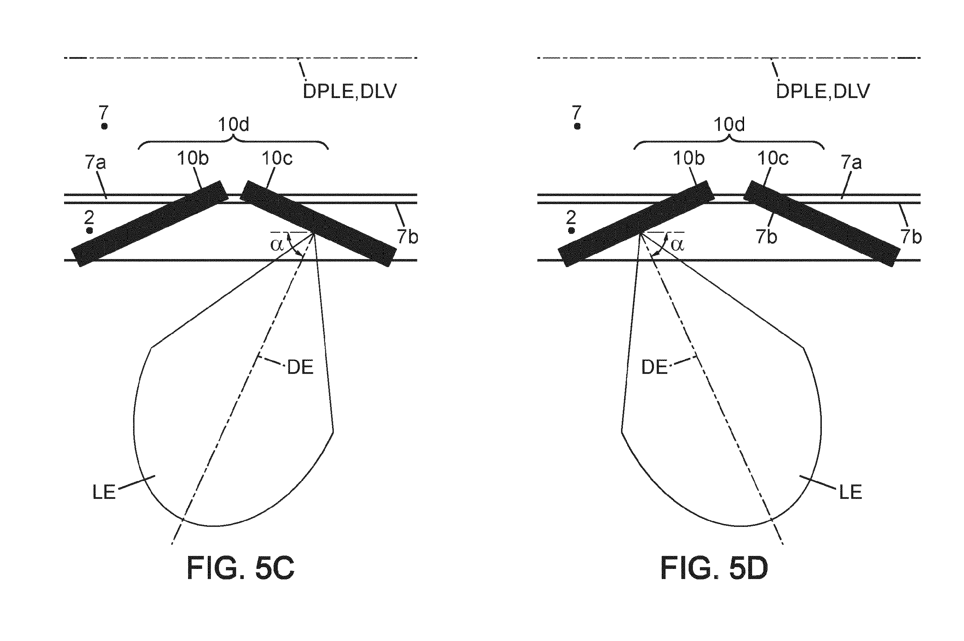

Selon une réalisation, il est prévu un moyen de commande du fonctionnement des deux antennes émettrices 10b et 10c, de sorte qu'elles fonctionnent de façon simultanée comme il est représenté sur la figure 5A, ou de sorte que l'une des deux antennes émettrices 10b, 10c fonctionne alors que l'autre des deux antennes émettrices 10c, 10b ne fonctionne pas comme il est représenté sur les figures 5C et 5D. Cette disposition constructive permet par exemple de sélectionner celle des deux antennes émettrices 10b et 10c que l'on souhaite voir fonctionner en fonction du sens de déplacement de l'engin à roues sur la voie 7, le moyen de commande du fonctionnement des deux antennes émettrices 10b et 10c étant alors est responsif à ce sens de déplacement.

Les différentes réalisations envisagées en ce qui concerne l'antenne émettrice 10 visent à ce que le recueil par l'antenne réceptrice 11 est assuré de façon encore plus effective et encore plus sûre, notamment pour tenir compte des différences existant entre les différents engins à roues 2 pouvant circuler sur la voie 7 ou bien pour tenir compte du contexte, tel que le déplacement rectiligne ou courbe de l'engin à roues, son inclinaison avant-arrière ou latérale, sa charge, la configuration spécifique de chaque système d'antennes 3 telle que par exemple la distance entre l'antenne émettrice 10 et l'antenne réceptrice 11 dans un endroit de communication 12.

Il peut également être envisagé différentes réalisations en ce qui concerne l'antenne réceptrice 11 pour les mêmes buts.

Ainsi, dans une réalisation, l'antenne réceptrice 11 a une direction principale de réception DR sensiblement perpendiculaire à la direction longitudinale à l'endroit de communication DLEC, comme il est représenté sur les figures 4 et 6A. Ou bien, dans une réalisation, la direction principale de réception DR est sensiblement parallèle à la direction principale d'émission DE d'une antenne émettrice 10 passant ou se trouvant dans l'endroit de communication 12 de la voie 7 associé à l'antenne réceptrice 11, comme il est représenté sur la figure 6B. Ou bien, dans une réalisation, la direction principale de réception DR est en oblique par rapport à la direction longitudinale à l'endroit de communication DLEC et/ou à la direction principale d'émission DE d'une antenne émettrice 10 passant ou se trouvant dans l'endroit de communication 12 de la voie 7 associé à l'antenne réceptrice 11 comme il est représenté sur les figures 4, et 6A à 6E.

Lorsqu'il est prévu deux antennes réceptrices 11b et 11c, selon les réalisations, les deux directions principales de réception DR de celles-ci sont soit sensiblement parallèles entre elles, soit sensiblement perpendiculaires entre elles comme il est représenté sur les figures 6D et 6E, soit en oblique l'une par rapport à l'autre.

Par ailleurs, il peut être prévu que les deux directions principales de réception DR sont sensiblement symétriques l'une de l'autre par rapport à une direction transversale perpendiculaire à la direction longitudinale à l'endroit de communication DLEC comme il est représenté sur les figures 6D et 6E.

Selon une autre réalisation, il peut être prévu que les deux directions principales de réception DR sont sensiblement symétriques l'une de l'autre par rapport à la direction principale d'émission DE d'une antenne émettrice 10 passant ou se trouvant dans l'endroit de communication 12 de la voie 7 associé aux deux antennes réceptrices 11b et 11c.

Egalement, selon les réalisations, une antenne émettrice 10 et/ou une antenne réceptrice 11 est plane comme il est représenté sur les figures 4, 5A à 5D, 6A à 6E, ou bien est incurvée, comme il est représenté sur la figure 6F, la concavité d'une antenne étant tournée vers l'autre antenne ou inversement.

Sur la base que l'antenne émettrice 10 est positionnée par rapport à l'engin 2 et à la voie 7 avec la direction principale d'émission De en oblique par rapport à la direction longitudinale à l'endroit de communication DLEC avec le lobe principal d'émission LE croisant l'antenne réceptrice 11 en biais, l'homme du métier peut faire choix de la réalisation adaptée au cas spécifique considéré.

## Revendications

1. Système de diagnostic de l'état structurel présent ou prévisionnel d'une unité de roulement (1) implantée sur un engin à roues (2) apte et destiné à se trouver et à se déplacer en roulant sur une voie (7) dans sa direction longitudinale (DLV), en particulier un véhicule ferroviaire (2),
. qui comprend :
∘ un moyen (8) de mesure de la valeur d'un paramètre des conditions de roulage de l'unité de roulement (1) caractéristique de son état structurel, embarqué sur l'engin à roues (2) et associé à l'unité de roulement (1), apte à mesurer la valeur du paramètre et à fournir une donnée caractéristique (A) des conditions de roulage, et un moyen (9) de calcul et d'analyse, apte, à partir de la donnée caractéristique (A), à fournir une information de diagnostic (B) de l'état structurel présent ou prévisionnel de l'unité de roulement (1)
∘ une antenne ponctuelle directionnelle émettrice (10), embarquée sur l'engin à roues (2), apte à émettre la donnée caractéristique (A) ou l'information de diagnostic (B) dans une direction principale d'émission (DE) et un lobe principal d'émission (LE),
∘ une antenne ponctuelle réceptrice (11) apte à recevoir la donnée caractéristique (A) ou l'information de diagnostic (B)
**caractérisé en ce que**
l'antenne ponctuelle réceptrice est dissociée structurellement de l'engin à roues (2) et localisée dans ou à proximité d'un endroit de communication de la voie (12), et par rapport à la voie (7) et à l'engin à roues (2), est agencée de sorte à se trouver dans le lobe principal d'émission (LE) de l'antenne émettrice (10) au moment où l'engin à roues (2), en particulier au moment où l'antenne émettrice (10), passe ou se trouve dans l'endroit de communication de la voie (12), et **en ce que**
. l'antenne émettrice (10) étant positionnée par rapport à l'engin à roues (2) et à la voie (7) avec la direction principale d'émission (DE) en oblique par rapport à la direction longitudinale à l'endroit de communication (DLEC), le lobe principal d'émission (LE) croisant l'antenne réceptrice (11) en biais,
. tel que, lorsque l'engin à roues (2) se déplace sur la voie (7) et toutes choses égales par ailleurs, la durée pendant laquelle l'antenne réceptrice (11) se trouve dans le lobe principal d'émission (LE) est augmentée.

2. Système de diagnostic selon la revendication 1, dans lequel la direction principale d'émission (DE) est inclinée par rapport à la direction longitudinale à l'endroit de communication (DLEC) avec un angle compris entre 20° et 70°, plus particulièrement compris entre 35 ° et 65 °.

3. Système de diagnostic selon l'une quelconque des revendications 1 et 2, dans lequel l'antenne émettrice (10) est portée par l'engin à roues (2) de façon relative fixe, ou est portée par l'engin à roues (2) de façon relative mobile et blocable en position, le système de diagnostic comportant un moyen de liaison antenne émettrice-engin à roues qui soit mobile ou déformable et un moyen de blocage en position relative fixe antenne émettrice-engin à roues apte à être rendu actif lorsque souhaité.

4. Système de diagnostic selon l'une quelconque des revendications 1 à 3, comportant un moyen de commande du fonctionnement de l'antenne émettrice (10) de façon permanente ou de façon temporaire pendant des phases d'émission commandées soit à des intervalles de temps réguliers soit à la demande soit en réponse à un facteur contextuel.

5. Système de diagnostic selon l'une quelconque des revendications 1 à 4, qui comprend une antenne émettrice unique (10, 10a) ou au moins deux antennes émettrices (10, 10b, 10c), en particulier des antennes émettrices analogues, formant un ensemble fonctionnel émetteur (10d).

6. Système de diagnostic selon la revendication 5, ayant deux antennes émettrices (10, 10b, 10c) dont les directions principales d'émission (DE) sont sensiblement parallèles entre elles, ou sensiblement perpendiculaires ou en oblique l'une par rapport à l'autre, et/ou sensiblement symétriques l'une de l'autre par rapport à une direction transversale perpendiculaire à la direction longitudinale à l'endroit de communication (DLEC).

7. Système de diagnostic selon l'une quelconque des revendications 5 et 6, ayant deux antennes émettrices (10, 10b, 10c) dont les lobes d'émission principaux (LE) se recouvrent partiellement, ou se tangentent, en particulier vers leurs parties distales, ou ayant deux antennes émettrices (10, 10b, 10c) dont les lobes d'émission principaux (LE) ne se recouvrent pas.

8. Système de diagnostic selon l'une quelconque des revendications 5 à 7, comportant un moyen de commande du fonctionnement des deux antennes émettrices (10, 10b, 10c) de sorte que les deux antennes émettrices (10, 10b, 10c) fonctionnent de façon simultanée ou de sorte que l'une des deux antennes émettrices (10, 10b, 10c) fonctionne alors que l'autre des deux antennes émettrices (10, 10b, 10c) ne fonctionne pas, le moyen de commande du fonctionnement des deux antennes émettrices (10, 10b, 10c) étant responsif au sens de déplacement de l'engin à roues (2) sur la voie (7).

9. Système de diagnostic selon l'une quelconque des revendications 5 à 8, dans lequel les deux antennes émettrices (10, 10b, 10c) sont les deux parties distinctes d'une même structure ou sont deux structures distinctes l'une de l'autre.

10. Système de diagnostic selon l'une quelconque des revendications 5 à 9 en ce qu'elles dépendent de la revendication 3, dans lequel les deux moyens de liaison antenne émettrice-engin à roues des deux antennes émettrices (10, 10b, 10c) sont mobiles ou déformables et agencés ou commandés pour un déplacement analogue simultané des deux antennes émettrices (10, 10b, 10c).

11. Système de diagnostic selon l'une quelconque des revendications 1 à 10, dont l'engin à roues (2), ayant une direction principale longitudinale (DPLE) et une pluralité d'unités de roulement (1), comporte une pluralité d'antennes émettrices (10) ou d'ensembles fonctionnels émetteurs (10d) espacés les uns des autres sur l'engin à roues (2) dans la direction principale longitudinale (DPLE) et/ou dans la direction transversale.

12. Système de diagnostic selon l'une quelconque des revendications 1 à 11, dans lequel l'antenne réceptrice (11) a une direction principale de réception (DR) sensiblement perpendiculaire à la direction longitudinale à l'endroit de communication (DLEC) ou en oblique par rapport à la direction longitudinale à l'endroit de communication (DLEC), et/ou une direction principale de réception (DR) sensiblement parallèle ou en oblique par rapport à la direction principale d'émission (DE) d'une antenne émettrice (10) passant ou se trouvant dans l'endroit de communication de la voie (12) associé à l'antenne réceptrice (11).

13. Système de diagnostic selon l'une quelconque des revendications 1 à 12, ayant une antenne réceptrice unique (11, 11a) ou deux antennes réceptrices (11, 11b, 11c) disposées au voisinage l'une de l'autre, en particulier des antennes réceptrices analogues, formant un ensemble fonctionnel récepteur (11d).

14. Système de diagnostic selon la revendication 13, ayant deux antennes réceptrices (11, 11a, 11 b) dont les directions principales de réception (DR) sont sensiblement parallèles entre elles, ou sensiblement perpendiculaires ou en oblique l'une par rapport à l'autre et/ou sensiblement symétriques l'une de l'autre par rapport à une direction transversale perpendiculaire à la direction longitudinale à l'endroit de communication (DLEC).

15. Système de diagnostic selon l'une quelconque des revendications 1 à 14, comportant une pluralité d'antennes réceptrices (11) ou d'ensembles fonctionnels récepteurs (11d) espacés les uns des autres le long de la voie (7), dans la direction longitudinale (DLV) et/ou transversale.

16. Système de diagnostic selon l'une quelconque des revendications 1 à 15, dans lequel le moyen (9) de calcul et d'analyse est dissocié structurellement de l'engin à roues (2), et l'antenne émettrice (10) émet ladite donnée caractéristique (A).

17. Engin à roues (2) sur lequel est implantée une unité de roulement (1), apte à se déplacer sur une voie (7), en particulier un véhicule ferroviaire :
▪ qui comprend, embarqués sur lui :
∘ un moyen (8) de mesure de la valeur d'un paramètre des conditions de roulage de l'unité de roulement (1) caractéristique de son état structurel, embarqué sur l'engin à roues (2) et associé à l'unité de roulement (1), apte à mesurer ladite valeur dudit paramètre et à fournir une donnée caractéristique (A) desdites conditions de roulage,
∘ et une antenne émettrice (10) de ladite donnée caractéristique (A) ou d'une information de diagnostic (B) fournie par un moyen (9) de calcul et d'analyse à partir de ladite donnée caractéristique (A), dans une direction principale d'émission (DE) et un lobe principal d'émission (LE), positionnée sur l'engin à roues (2) avec la direction principale d'émission (DE) en oblique par rapport à la direction principale longitudinale de l'engin à roues (2),
▪ qui fait partie d'un système de diagnostic selon l'une quelconque des revendications 1 à 16.

## Patentansprüche

1. Diagnosesystem des vorhandenen oder voraussichtlichen strukturellen Zustandes einer Rolleinheit (1), die auf einem Rollwagen (2) angeordnet ist, der dazu geeignet und bestimmt ist, sich rollend auf einem Weg (7) in seine Längsrichtung (DLV), insbesondere einem Schienenfahrzeug (2), zu befinden und zu bewegen,
- umfassend:
* ein Mittel (8) zum Messen des Werts eines Parameters für die Rollbedingungen der Rolleinheit (1), der für ihren strukturellen Zustand charakteristisch ist, das auf dem Rollwagen (2) angeordnet und mit der Rolleinheit (1) verbunden und geeignet ist, den Wert des Parameters zu messen und ein charakteristisches Datum (A) für die Rollbedingungen zu liefern, und ein Berechnungs- und Analysemittel (9), das geeignet ist, auf Basis des charakteristischen Datums (A) eine Diagnoseinformation (B) über den vorhandenen oder voraussichtlichen strukturellen Zustand der Rolleinheit (1) zu liefern,
* eine punktuelle Senderichtantenne (10), die auf dem Rollwagen (2) angeordnet und geeignet ist, das charakteristische Datum (A) oder die Diagnoseinformation (B) in eine Hauptsenderichtung (DE) zu senden, und eine Hauptsendekeule (LE),
* eine punktuelle Empfangsantenne (11), die geeignet ist, das charakteristische Datum (A) oder die Diagnoseinformation (B) zu empfangen,
**dadurch gekennzeichnet, dass**
- die punktuelle Empfangsantenne strukturell von dem Rollwagen (2) getrennt und an oder in der Nähe einer Verbindungsstelle des Weges (12) in Bezug zum Weg (7) und dem Rollwagen (2) lokalisiert und derart angeordnet ist, dass sie sich in der Hauptsendekeule (LE) der Sendeantenne (10) zu dem Zeitpunkt befindet, zu dem der Rollwagen (2), insbesondere zu dem die Sendeantenne (10), die Verbindungsstelle des Weges (12) passiert oder sich an dieser befindet, und dass
- da die Sendeantenne (10) in Bezug zum Rollwagen (2) und zum Weg (7) mit der Hauptsenderichtung (DE) schräg zur Längsrichtung an der Verbindungsstelle (DLEC) angeordnet ist, die Hauptsendekeule (LE) die Empfangsantenne (11) schräg kreuzt,
- so dass, wenn sich der Rollwagen (2) auf dem Weg (7) bewegt und unter sonst unveränderten Bedingungen die Dauer, während der sich die Empfangsantenne (11) in der Hauptsendekeule (LE) befindet, erhöht wird.

2. Diagnosesystem nach Anspruch 1, bei dem die Hauptsenderichtung (DE) in Bezug zur Längsrichtung an der Verbindungsstelle (DLEC) mit einem Winkel zwischen 20 ° und 70 °, insbesondere zwischen 35 ° und 65 °, geneigt ist.

3. Diagnosesystem nach einem der Ansprüche 1 und 2, bei dem die Sendeantenne (10) von dem Rollwagen (2) relativ fest getragen wird oder von dem Rollwagen (2) relativ beweglich und in Position feststellbar getragen wird, wobei das Diagnosesystem ein Verbindungsmittel Sendeantenne-Rollwagen, das beweglich oder verformbar ist, und ein Mittel zur Feststellung in relativ fester Position von Sendeantenne-Rollwagen umfasst, das, wenn gewünscht, aktiv gesetzt werden kann.

4. Diagnosesystem nach einem der Ansprüche 1 bis 3, umfassend ein Mittel zur Steuerung der Funktion der Sendeantenne (10) auf permanente oder temporäre Weise während Sendephasen, die entweder in regelmäßigen Zeitintervallen oder auf Anfrage oder als Antwort auf einen Kontextfaktor gesteuert werden.

5. Diagnosesystem nach einem der Ansprüche 1 bis 4, das eine einzige Sendeantenne (10, 10a) oder mindestens zwei Sendeantennen (10, 10b, 10c), insbesondere analoge Sendeantennen, umfasst, die eine funktionelle Sendeeinheit (10d) bilden.

6. Diagnosesystem nach Anspruch 5 mit zwei Sendeantennen (10, 10b, 10c), deren Hauptsenderichtungen (DE) im Wesentlichen zueinander parallel oder im Wesentlichen aufeinander senkrecht oder zueinander schräg und/oder im Wesentlichen zueinander und zu einer Querrichtung senkrecht auf die Längsrichtung an der Verbindungsstelle (DLEC) symmetrisch sind.

7. Diagnosesystem nach einem der Ansprüche 5 und 6 mit zwei Sendeantennen (10, 10b, 10c), deren Hauptsendekeulen (LE) einander teilweise überlappen oder tangieren, insbesondere zu ihren distalen Teilen hin, oder mit zwei Sendeantennen (10, 10b, 10c), deren Hauptsendekeulen (LE) einander nicht überlappen.

8. Diagnosesystem nach einem der Ansprüche 5 bis 7, umfassend ein Mittel zur Steuerung der Funktion der beiden Sendeantennen (10, 10b, 10c), so dass die beiden Sendeantennen (10, 10b, 10c) gleichzeitig funktionieren oder so dass eine der beiden Sendeantennen (10, 10b, 10c) funktioniert, während die andere der beiden Sendeantennen (10, 10b, 10c) nicht funktioniert, wobei das Mittel zur Steuerung der Funktion der beiden Sendeantennen (10, 10b, 10c) auf die Bewegungsrichtung des Rollwagens (2) auf dem Weg (7) antwortet.

9. Diagnosesystem nach einem der Ansprüche 5 bis 8, bei dem die beiden Sendeantennen (10, 10b, 10c) die beiden getrennten Teile einer selben Struktur oder zwei voneinander getrennte Strukturen sind.

10. Diagnosesystem nach einem der Ansprüche 5 bis 9, als diese von Anspruch 3 abhängen, bei dem die beiden Verbindungsmittel Sendeantenne-Rollwagen der beiden Sendeantennen (10, 10b, 10c) beweglich oder verformbar und derart angeordnet oder gesteuert sind, dass eine gleichzeitige analoge Bewegung der beiden Sendeantennen (10, 10b, 10c) erfolgt.

11. Diagnosesystem nach einem der Ansprüche 1 bis 10, dessen Rollwagen (2) mit einer Hauptlängsrichtung (DPLE) und einer Vielzahl von Rolleinheiten (1) eine Vielzahl von Sendeantennen (10) oder von funktionellen Sendeeinheiten (10d) umfasst, die zueinander auf dem Rollwagen (2) in die Hauptlängsrichtung (DPLE) und/oder in die Querrichtung beabstandet sind.

12. Diagnosesystem nach einem der Ansprüche 1 bis 11, bei dem die Empfangsantenne (11) eine Hauptempfangsrichtung (DR) im Wesentlichen senkrecht auf die Längsrichtung an der Verbindungsstelle (DLEC) oder schräg zur Längsrichtung an der Verbindungsstelle (DLEC) und/oder eine Hauptempfangsrichtung (DR) im Wesentlichen parallel oder schräg zur Hauptsenderichtung (DE) einer Sendeantenne (10) hat, die die Verbindungsstelle des Weges (12), die mit der Empfangsantenne (11) verbunden ist, passiert oder sich an dieser befindet.

13. Diagnosesystem nach einem der Ansprüche 1 bis 12 mit einer einzigen Empfangsantenne (11, 11a) oder zwei Empfangsantennen (11, 11 b, 11 c), die in der Nähe zueinander angeordnet sind, insbesondere analogen Empfangsantennen, die eine funktionelle Empfangseinheit (11d) bilden.

14. Diagnosesystem nach Anspruch 13 mit zwei Empfangsantennen (11, 11a, 11b), deren Hauptempfangsrichtungen (DR) im Wesentlichen zueinander parallel oder im Wesentlichen senkrecht oder schräg zueinander und/oder im Wesentlichen symmetrisch zueinander und in Bezug zu einer Querrichtung senkrecht auf die Längsrichtung an der Verbindungsstelle (DLEC) sind.

15. Diagnosesystem nach einem der Ansprüche 1 bis 14, umfassend eine Vielzahl von Empfangsantennen (11) oder funktionellen Empfangseinheiten (11d), die zueinander entlang des Weges (7) in Längsrichtung (DLV) und/oder Querrichtung beabstandet sind.

16. Diagnosesystem nach einem der Ansprüche 1 bis 15, bei dem das Berechnungs- und Analysemittel (9) strukturell von dem Rollwagen (2) getrennt ist, und die Sendeantenne (10) das charakteristische Datum (A) entsendet.

17. Rollwagen (2), auf dem eine Rolleinheit (1) angeordnet ist, die geeignet ist, sich auf einem Weg (7) zu bewegen, insbesondere ein Schienenfahrzeug:
* der auf ihm angeordnet umfasst:
- ein Mittel (8) zum Messen des Werts eines Parameters für die Rollbedingungen der Rolleinheit (1), der für ihren strukturellen Zustand charakteristisch ist, das auf dem Rollwagen (2) angeordnet und mit der Rolleinheit (1) verbunden und geeignet ist, den Wert des Parameters zu messen und ein charakteristisches Datum (A) für die Rollbedingungen zu liefern,
- eine Sendeantenne (10) für das charakteristische Datum (A) oder eine Diagnoseinformation (B), die von einem Berechnungs- und Analysemittel (9) auf Basis des charakteristischen Datums (A) in eine Hauptsenderichtung (DE) geliefert wird, und eine Hauptsendekeule (LE), die auf dem Rollwagen (2) mit der Hauptsenderichtung (DE) schräg zur Hauptlängsrichtung des Rollwagens (2) angeordnet ist,
* der Teil eines Diagnosesystems nach einem der Ansprüche 1 bis 16 ist.

## Claims

1. Diagnostic system for the present or predicted structural condition of a mechanical bearing unit (1) installed on wheeled equipment (2) suited and intended to be located on and moved by rolling on a track (7) in the longitudinal direction (LDT) thereof, in particular a railway car (2)
▪ comprising:
∘ a means (8) for measuring the value of a parameter of the rolling conditions of the mechanical bearing unit (1) characteristic of the structural state thereof, onboard the wheeled equipment (2) and matched with the mechanical bearing unit (1), suited for measuring the value of the parameter and providing data characteristic (A) of the rolling conditions and a means (9) for calculation and analysis, suited, starting from the characteristic data (A), to provide diagnostic information (B) on the present or predicted structural condition of the mechanical bearing unit (1),
∘ a point, directional transmitting antenna (10), onboard the wheeled equipment (2) suited for transmitting the characteristic data (A) or the diagnostic information (B) in a main transmission direction (TD) and a main emission lobe (TL),
∘ a point, receiving antenna (11), suited to receive the characteristic data (A) or diagnostic information (B) **characterized in that**
▪ the point, receiving antenna (11) is structurally disassociated from the wheeled equipment (2) and located in or near a communication area for the track (12), relative to the track (7) and the wheeled equipment (2), is arranged so as to be located in the main transmission lobe (TL) of the transmitting antenna (10) at the moment when the wheeled equipment (2), in particular at the moment when the transmitting antenna (10), passes or is located in the communication area for the track (12), and **in that**
▪ the transmitting antenna (10) is positioned relative to the wheeled equipment (2) and the track (7) with the main transmission direction (TD) oblique relative to the longitudinal direction in the communication area (LDCA), and where the main transmission lobe (TL) crosses the receiving antenna (11) at an angle, whereby, when the wheeled equipment (2) moves on the track (7) and everything else is equal, the time during which the receiving antenna (11) is located in the main transmission lobe (TL) is increased.

2. Diagnostic system according to claim 1, wherein the main transmission direction (TD) is inclined relative to the longitudinal direction in the communication area (LDCA) with an angle included between 20° and 70°, more specifically included between 35° and 65°.

3. Diagnostic system according to any one of the claims 1 and 2, wherein the transmitting antenna (10) is carried by wheeled equipment (2) so it is fixed relative thereto, or is carried by the wheeled equipment (2) so it is mobile and lockable in position relative thereto, where the diagnostic system comprises a means for transmitting antenna to wheeled equipment connection which is mobile or deformable and a means for locking the transmitting antenna and wheeled equipment into fixed relative position ready to be made active when desired.

4. Diagnostic system according to any one of claims 1 to 3, comprising a means for controlling operation of the transmitting antenna (10), continuously or temporarily during controlled emission phases or regular time intervals or on-demand/or in response to a contextual factor.

5. Diagnostic system according to any one of claims 1 to 4, comprising a single transmitting antenna (10, 10a) or at least two transmitting antennas (10, 10b, 10c), in particular analog transmitting antennas, forming a functional transmitter assembly (10d).

6. Diagnostic system according to claim 5, having two transmitting antennas (10, 10b, 10c) whose main transmission directions (TD) are substantially parallel to each other, or substantially perpendicular or oblique relative to each other and/or substantially symmetric to each other relative to a transverse direction perpendicular to the longitudinal direction in the communication area (LDAC).

7. Diagnostic system according to any one of claims 5 and 6, having two transmitting antennas (10, 10b, 10c) whose main transmission lobes (TL) partially overlap, or are tangential, in particular towards their far portions, or having two transmitting antennas (10, 10b, 10c) whose main transmission lobes (TL) do not overlap.

8. Diagnostic system according to any one of claims 5 to 7, comprising a means for control of the operation of the two transmitting antennas (10, 10b, 10c) such that the two transmitting antennas (10, 10b, 10c) operate simultaneously or such that one of the two transmitting antennas (10, 10b, 10c) operates while the other of the two transmitting antennas (10, 10b, 10c) does not operate, where the means for control of the operation of the two transmitting antennas (10, 10b, 10c) responds to the direction of movement of the wheeled equipment (2) on the track (7).

9. Diagnostic system according to any one of claims 5 to 8, wherein the two transmitting antennas (10, 10b, 10c) are two distinct parts of a single structure or are two structures distinct from each other.

10. Diagnostic system according to any one of claims 5 to 9 in that they depend from claim 3, wherein the two means of transmitting-antenna to wheel connection for the two transmitting antennas (10, 10b, 10c) are mobile or deformable and arranged or controlled for simultaneous analogous movement of the two transmitting antennas (10, 10b, 10c).

11. Diagnostic system according to any one of claims 1 to 10, wherein the wheeled equipment (2), having a main longitudinal direction (MLDE) and a plurality of rolling stock (1), comprises a plurality of transmitting antennas (10) or transmitting functional assemblies (10d) spaced apart on the wheeled equipment (2) in the main longitudinal direction (MLDE) and/or in the transverse direction.

12. Diagnostic system according to any one of claims 1 to 11, wherein the receiving antenna (11) has a main receiving direction (RD) substantially perpendicular to the longitudinal direction in the communication area (LDCA) or oblique relative to the longitudinal direction in the communication area (LDCA), and/or a main receiving direction (RD) substantially parallel or oblique relative to the main transmission direction (TD) of the transmitting antenna (10) passing or located in the communication area of the track (12) associated with the receiving antenna (11).

13. Diagnostic system according to any one of claims 1 to 12, having a single receiving antenna (11, 11a) or two receiving antennas (11, 11b, 11c) arranged near each other, in particular analogous receiving antennas, forming a functional receiver assembly (11d).

14. Diagnostic system according to claim 13, having two receiving antennas (11, 11b, 11c) whose main receiving directions (RD) are substantially parallel to each other, or substantially perpendicular or oblique relative to each other and/or substantially symmetric to each other relative to a transverse direction perpendicular to the longitudinal direction in the communication area (LDAC).

15. Diagnostic system according to any one of claims 1 to 14, comprising a plurality of receiving antennas (11) or functional receiving assemblies (11d) spaced apart along the track (7), in the longitudinal (LDT) and/or transverse direction.

16. Diagnostic system according to any one of claims 1 to 15, in which the means (9) of calculation and analysis is structurally dissociated from the wheeled equipment (2), and the transmitting antenna (10) transmits said characteristic data (A).

17. Wheeled equipment (2) on which a mechanical bearing unit (1) is installed suited to move on the track (7), in particular a railway car:
▪ which includes, onboard it:
∘ a means (8) for measuring the value of a parameter of the rolling conditions of the mechanical bearing unit (1) characteristic of the structural state thereof, onboard the wheeled equipment (2) and matched with the mechanical bearing unit (1), suited for measuring said value of said parameter and providing data characteristic (A) of said rolling conditions;
∘ and a transmitting antenna (10) for said characteristic data (A) or diagnostic information (B) provided by a means (9) of calculation and analysis starting from said characteristic data (A), in a main transmission direction (TD) and a main transmission lobe (TL), positioned on the wheeled equipment (2) with the main transmission direction (TD) oblique relative to the main longitudinal direction of the wheeled equipment (2),
▪ which is part of a diagnostic system according to any one of claims 1 to 16.
